Europäisches Patentamt

European Patent Office

Office européen des brevets

(19)

(11) **EP 1 522 431 A2**

(12) **EUROPEAN PATENT APPLICATION**

(43) Date of publication:
**13.04.2005 Bulletin 2005/15**

(51) Int Cl.7: **B60G 17/015**, G01B 17/00, F16F 9/32

(21) Application number: **04024039.2**

(22) Date of filing: **08.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.10.2003 JP 2003348950**

(71) Applicant: **Hitachi, Ltd.**
**Tokyo 100-8280 (JP)**

(72) Inventor: **Sasada, Yoshiyuki Hitachi, Ltd.**
**Chiyoda-ku Tokyo 100-8220 (JP)**

(74) Representative: **Beetz & Partner Patentanwälte**
**Steinsdorfstrasse 10**
**80538 München (DE)**

(54) **Suspension device for vehicle**

(57) The invention relates to a suspension device (2) including a radar sensor (13) installed in the suspension for detecting the behavior of the suspension, high pressure is applied to the radar sensor (13) and measurement errors tend to be caused by changes in the flow, temperature and pressure of oil around the sensor (13). In order to realize precise measurement even in the oil environment, a radio wave radar sensor (13) (especially, a millimeter wave radar sensor) is employed as the radar sensor (13), and the radio wave radar sensor (13) is mounted in a ceramic package (102), by which the precise detection of the suspension behavior in the oil environment withstanding high pressure is realized.

FIG.2

**FIG.2** — 4 CONNECTOR, 5 ROD GUIDE, 23, 6, 7, 8, 9, 22, CONTRACTION-SIDE VALVE 21, 10, 11, EXPANSION-SIDE VALVE 20, 12, 13, 14, 19, 15, 16, 17, 18

EP 1 522 431 A2

## Description

BACKGROUND OF THE INVENTION

The present invention relates to a suspension device, and in particular, to a suspension device which measures or controls relative behavior between a body-side structure and a wheel-side structure of a vehicle.

As a known technique for a suspension device capable of measuring relative behavior between a super-spring structure and a sub-spring structure of a vehicle, there has been disclosed a vehicle behavior measurement device for measuring the relative behavior between the super-spring structure and the sub-spring structure in JP-A-11-72132.

The vehicle behavior measurement device of the above document comprises: an ultrasonic wave transceiver which is fixed with respect to a first end (moving in a certain relationship with the super-spring structure) or a second end (moving in a certain relationship with the sub-spring structure) for transmitting ultrasonic waves to the other end or to a part moving in a certain relationship with the other end, receiving the ultrasonic waves, and converting the received ultrasonic waves into a reception signal; a transmission circuit in charge of transmission control of the ultrasonic waves; a detector circuit which detects reflected waves (the ultrasonic waves reflected by the other end or the part moving in the certain relationship with the other end) from the reception signal; and a behavior calculation module which calculates the relative behavior between the super-spring structure and the sub-spring structure based on the transmitted ultrasonic waves and the reflected waves.

As another known technique, a shock absorber equipped with a Doppler fluid velocity sensor has been disclosed in JP-B2-7-10642.

The shock absorber of the above document comprises: a first cylinder serving as a hydraulic actuator connecting a super-spring part and a sub-spring part of a car while forming a power chamber which can store a vibration damping fluid, capable of selectively changing a suspension parameter in response to a change in the velocity of the vibration damping fluid flowing in the hydraulic actuator; a piston which is placed in the first cylinder to partition the inside of the power chamber into a first part and a second part; a valve module which supplies a fixed amount of flow of the vibration damping fluid to the inside of the hydraulic actuator; a transducer module which emits and receives a sound wave propagating through the vibration damping fluid flowing through a fluid channel of the valve module; an excitation module which excites the transducer module and lets the transducer module emit the sound wave; a measurement module which measures frequency change between the sound wave emitted by the transducer module and the sound wave received by the transducer module and generates an output signal in response to the frequency change; and a velocity calculation module which calculates the velocity of the vibration damping fluid flowing through the valve module in response to the output of the measurement module.

However, since the vehicle behavior measurement device for measuring the relative behavior between the super-spring structure and the sub-spring structure (JP-A-11-72132) and the shock absorber equipped with the Doppler fluid velocity sensor (JP-B2-7-10642) both use ultrasonic waves for the measurement, a transmission unit and a reception unit have to be provided separately and it is difficult to miniaturize the transmission and reception units to install them inside the suspension.

Second, a signal processing unit has to be placed outside the suspension, separately from the transmission and reception units, by which the composition becomes complicated and cost reduction becomes difficult.

Third, a weak signal from an ultrasonic sensor before signal processing has to be transmitted from inside the suspension to the outside by a signal wire, in which noise reduction becomes a technical challenge.

Fourth, while the relative velocity V between the super-spring part and the sub-spring part can be calculated from the frequency f0 of a driving signal, the frequency fr of the detected reception signal and the velocity C of sound in the medium based on the following expression (1):

$$V = (fr - f0) \cdot C/(fr + f0) \qquad (1)$$

, the sound velocity C changes depending on the flow, temperature and pressure of the medium since the transmission/reception of the ultrasonic waves is carried out with the fluid inside the suspension as the medium. As a result, the calculated relative velocity V might have a considerable error.

Fifth, while correction by use of a temperature sensor and a pressure sensor is being considered to resolve the above problem, there remain problems from the viewpoints of structure and costs.

Sixth, while the fluid in the suspension can become high pressure, a high-pressure-resistant structure can not be implemented by the above prior art.

SUMMARY OF THE INVENTION

It is an object of the present invention to provide a suspension device capable of detecting the behavior of the suspension precisely at a low cost and having high reliability against pressure.

In accordance with an aspect of the present invention, a suspension device comprising a rod supporting a super-spring structure connected to a body of a vehicle, a cylinder supporting a sub-spring structure connected to a wheel (the rod and the cylinder behaves according to prescribed spring constant and damper constant) is provided with a transmitter which is provided to the rod or the cylinder to transmit a transmission wave to the cylinder or rod facing the transmitter, a receiver which receives a reflected wave from the cylinder or rod facing the transmitter as a reception wave, and/or a signal processing circuit which calculates relative behavior of the rod and the cylinder based on the transmission wave and the reception wave.

Preferably, the transmission wave is a radio wave in a millimeter wave band.

The suspension device may further comprise a mixer which outputs a frequency difference between a frequency of the transmission wave and a frequency of the reception wave. The signal processing circuit calculates the relative behavior of the rod and the cylinder by executing a Fourier transform to the output of the mixer.

The transmitter may transmit the transmission wave as pulse signals, and the signal processing circuit may calculate the relative behavior of the rod and the cylinder by measuring each time from the transmission of the transmission wave to the reception of the reflected wave as the reception wave.

A surface facing the transmitter may be formed in a pyramidal or circular concave shape.

At least the transmitter, the receiver and the mixer may be implemented by an MMIC. The MMIC and the signal processing circuit may be mounted in a package

The package may be fixed to the rod or the cylinder via a housing supporting the package.

The package may be fixed to the rod or the cylinder via the housing by welding, by screws, or by bolts and nuts.

The package may include a case and a cover made of ceramic or resin. The cover may be provided with a dielectric lens.

The dielectric lens may be placed in a central part or at the center of the rod or the cylinder.

The suspension device may further comprise a position sensor which detects relative position between the super-spring structure and the sub-spring structure in a rod axis direction. In this case, measurement values of the relative behavior of the rod and the cylinder obtained by the signal processing circuit are corrected based on positional information obtained by the position sensor. The relative position may be detected regarding two or more points.

In accordance with another aspect of the present invention, a suspension device comprising a rod supporting a super-spring structure connected to a body of a vehicle and a cylinder supporting a sub-spring structure connected to a wheel (the rod and the cylinder exhibits behavior specified by prescribed spring constant and damper constant) is provided with a sensor which detects relative behavior of the rod and the cylinder and a wheel status estimating device which estimates status of the wheel based on information on the relative behavior detected by the sensor.

The sensor may be one selected from an acceleration sensor, a linear sensor and a radar sensor.

The estimated status of the wheel may include at least one of air pressure and attachment status of the wheel.

BRIEF DESCRIPTION OF THE DRAWINGS

The objects and features of the present invention will become more apparent from the consideration of the following detailed description taken in conjunction with the accompanying drawings, in which:

Fig. 1 is a schematic diagram showing a suspension device installed in a vehicle;
Fig. 2 is a schematic cross-sectional view showing the composition of a suspension device in accordance with an embodiment of the present invention;
Fig. 3 is a flow chart showing a process executed by the suspension device;
Figs. 4A and 4B are schematic diagrams showing examples of an RF module of the suspension device;
Figs. 5A and 5B are graphs showing IF signal strength when the vehicle is stopped and the result of a Fourier transform executed to the IF signal strength;
Figs. 6A and 6B are graphs showing IF signal strength when the vehicle is running and the result of a Fourier transform executed to the IF signal strength;
Fig. 7 is a graph showing a method for detecting noise and a peak;
Fig. 8 is a graph showing a method for detecting the peak; and
Fig. 9A and 9B are schematic diagrams showing a vertical cross section and an X-X cross section of a radio wave radar sensor of the suspension device.

DESCRIPTION OF THE INVENTION

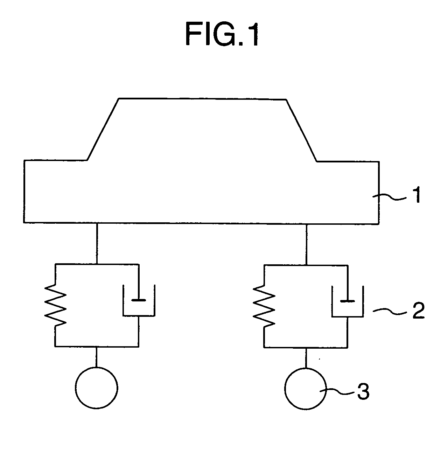

In the following, an embodiment regarding a suspension device in accordance with the present invention will be described with reference to Figs. 1 through 9. Referring to Fig. 1, a suspension device 2 is provided between a super-spring structure which is connected to a body 1 and each sub-spring structure which is connected to each wheel 3.

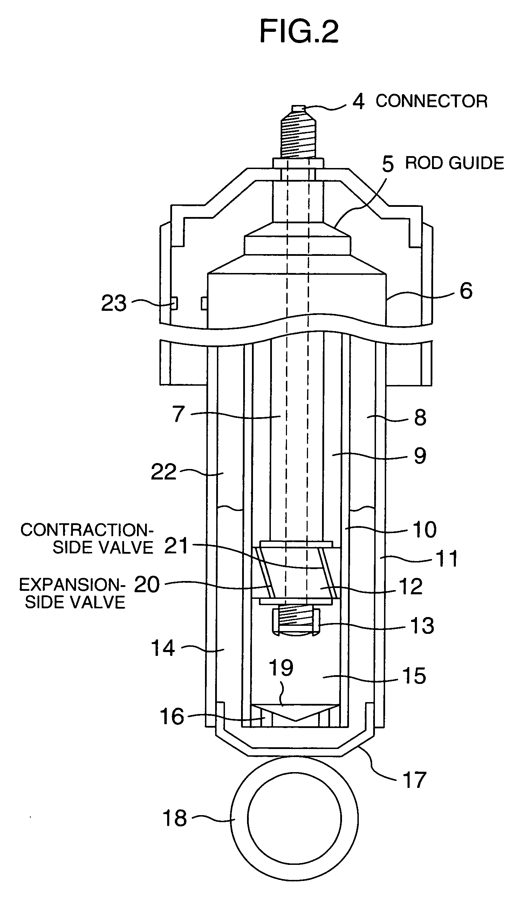

The suspension device 2 will be explained below referring to Fig. 2. An inner cylinder 10 filled with oil 14 is partitioned into an upper chamber 9 and a lower chamber 15 by a piston 12. The piston 12 is joined to a rod 7 which is connected to the body through a rod guide 5.

When the rod 7 moves downward in the vertical direction, the oil in the lower chamber 15 moves to a reservoir chamber 8 (between the inner cylinder 10 and an outer cylinder 11) and the upper chamber 9 via channels 16 and a contraction-side valve 21, respectively. On the other hand, when the rod 7 moves upward in the vertical direction, the oil in the upper chamber 9 moves to the reservoir chamber 8 and the lower chamber 15 via channels of an upper cap 6 and an expansion-side valve 20, respectively. In this case, the channels of the upper cap 6 let through the oil only (not nitrogen 22 in the reservoir chamber).

The outer cylinder 11, sealing up the oil with the upper cap 6 and a lower cap 17, is connected to the wheel via a connection part 18 which is attached to the lower cap 17.

On a part of the rod 7 opposite to the end connected to the body, a radio wave radar sensor 13 is attached.

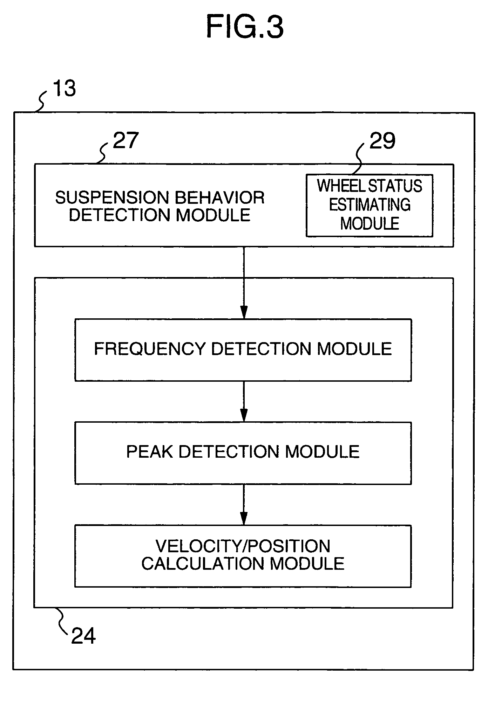

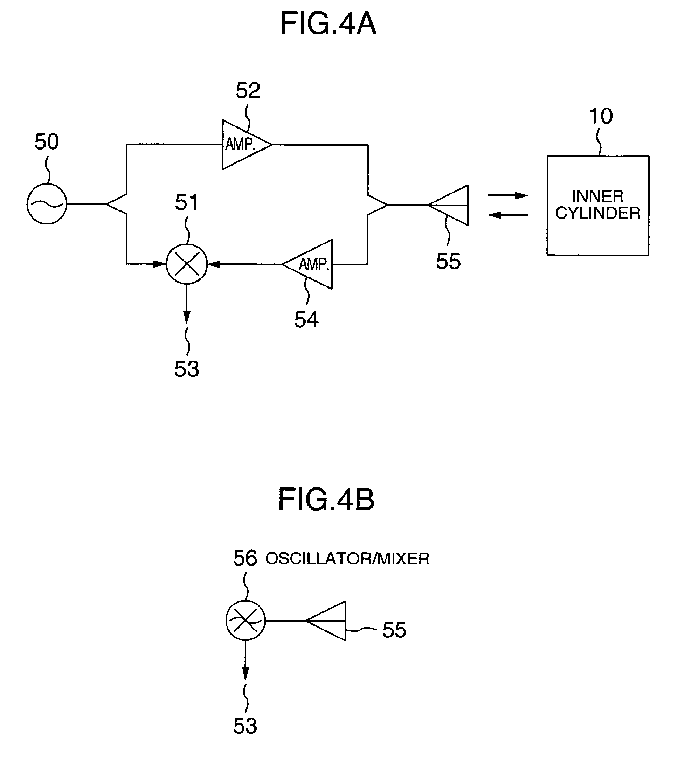

Fig. 3 shows a flow until the radio wave radar sensor 13 detects the behavior of the suspension. The radio wave radar sensor 13 includes an RF module 27 for detecting the behavior of the suspension and a processor 24 for carrying out information processing. Each step shown in Fig. 3 will be explained below referring to Figs. 4 through 8.

Figs. 4A and 4B show the composition of the RF module 27 as a suspension behavior detection module. Referring to Fig. 4A, a signal from an oscillator 50 is amplified by an amplifier 52 and transmitted by a TX/RX (transmission/reception) antenna 55, and reflected waves from the inner cylinder 10 are received by the TX/RX antenna 55. A reception signal obtained by the TX/RX antenna 55 is amplified by a low noise amplifier 54 and mixed with the signal from the oscillator 50 by a mixer 51, by which an IF (Intermediate Frequency) signal 53 is obtained. While a composition employing the amplifier 52 and the low noise amplifier 54 for the radio wave radar sensor is shown in Fig. 4A, the amplifier 52 and the low noise amplifier 54 become unnecessary when the signal strength of the IF signal 53 is high enough. Fig. 4B shows such an example, in which the amplifier 52 and the low noise amplifier 54 are left out and an oscillator/mixer 56 serving as both an oscillator and a mixer is connected to the TX/RX antenna 55. The function of the suspension behavior detection module does not differ between Fig. 4A and Fig. 4B.

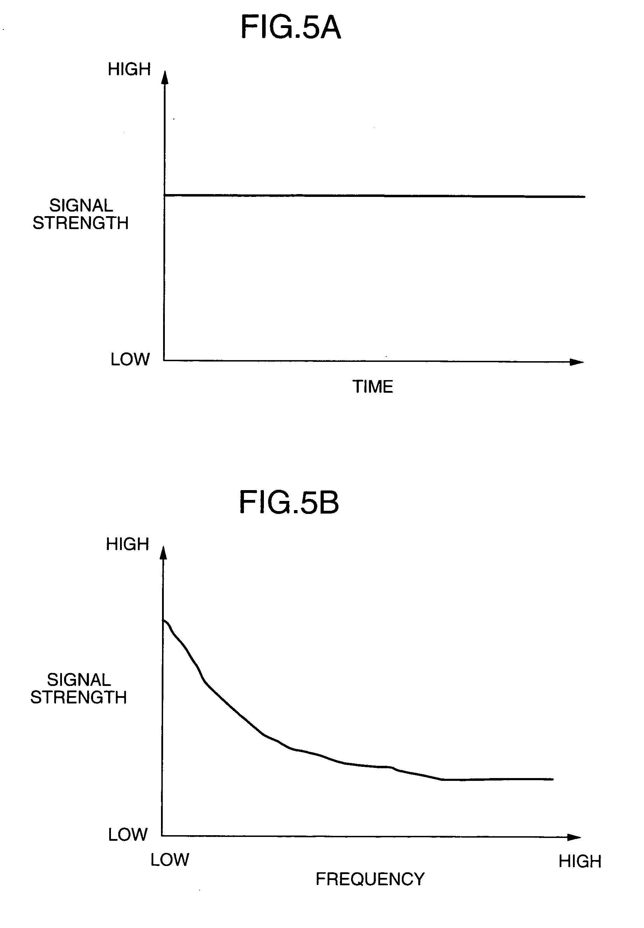

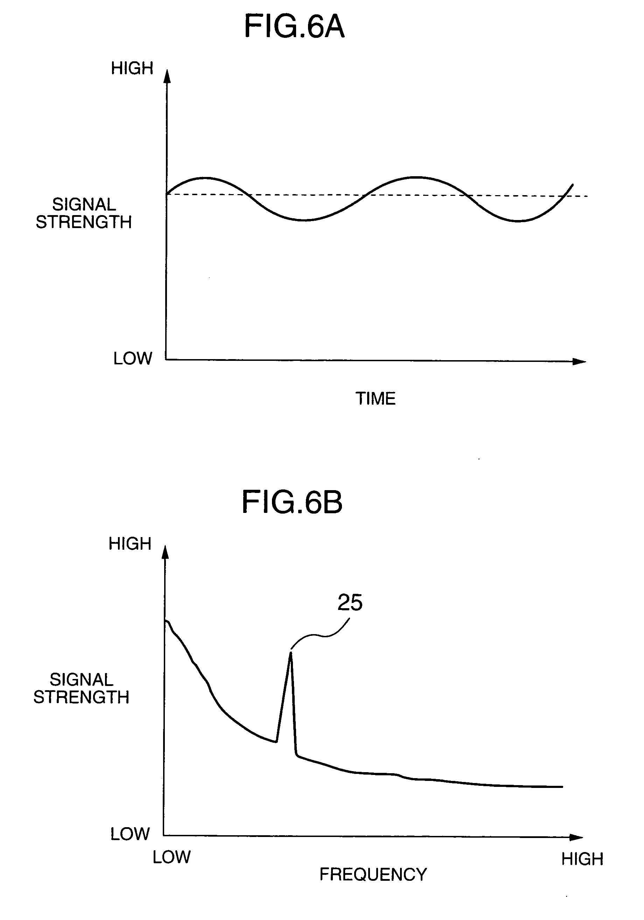

Next, a frequency detection module will be explained below referring to Figs. 5A through 6B. When the vehicle is stopped, the suspension does not vibrate and the distance between the radio wave radar sensor 13 and the inner cylinder 10 is almost constant, by which the strength of the IF signal 53 outputted by the RF module 27 of the radio wave radar sensor 13 behaves as shown in Fig. 5A. On the other hand, when the vehicle is running, the suspension vibrates and the distance between the radio wave radar sensor 13 and the inner cylinder 10 changes, by which the strength of the IF signal 53 outputted by the RF module 27 of the radio wave radar sensor 13 behaves as shown in Fig. 6A. The IF signal 53 is A/D converted (by passing the signal through a high-pass filter) and transformed by the fast Fourier transform, by which the relationship between the frequency and the signal strength is derived as shown in Figs. 5B and 6B (corresponding to Figs. 5A and 6A, respectively). The high signal strength at low frequencies is caused by the so-called 1/F noise which is dependent on the frequency band. The peak 25 seen in Fig. 6B indicates the relative behavior between the radio wave radar sensor 13 and the inner cylinder 10, that is, the behavior of the suspension.

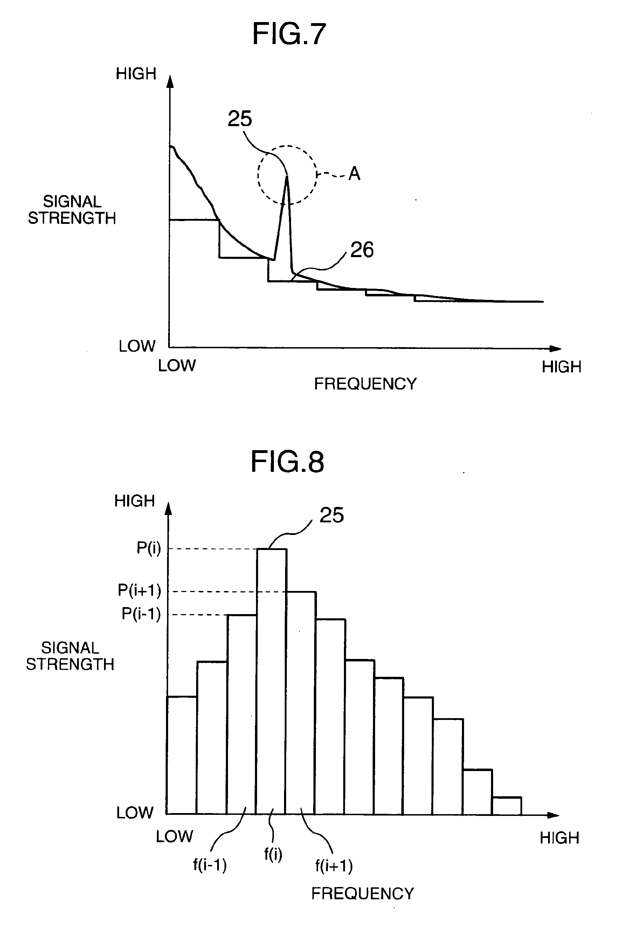

Next, a peak detection module for detecting the peak 25 shown in Fig. 6B will be explained below referring to Figs. 7 and 8. For the detection of the peak 25, separation of the signal from noise is essential. Since the peak 25 is higher than the noise, a method for detecting the noise will be explained first referring to Fig. 7. While the frequency spectrum including the peak 25 is updated at prescribed time intervals, the spectrum except the peak 25 has little time dependence, showing a continuous change with a large time constant even when it changes. Therefore, the noise 26 can be detected by taking a moving average with respect to time. Accordingly, the part A shown in Fig. 7 sufficiently higher than the noise 26 is detected as the peak 25. Specifically, a point P(i) satisfying P(i-1) < P(i) and P(i) > P(i+1) (i = 1, 2, 3, ⋯) is defined as the peak 25.

Next, a velocity/position calculation module will be explained below. The frequency of the peak 25 detected in Fig. 8 is the Doppler frequency which changes according to the relative velocity between the radio wave radar sensor 13 and the inner cylinder 10. Therefore, the relative velocity between the radio wave radar sensor 13 and the inner cylinder 10 (i.e. relative velocity V1 between the super-spring structure and the sub-spring structure) can be obtained from the frequency f1 of the transmission signal, the frequency fr1 of the detected reception signal and the velocity C1 of the radio wave in the oil, based on the following expression (2):

$$V1 = (fr1 - f1) \cdot C1/(fr1 + f1) \qquad (2)$$

Further, the position of the radio wave radar sensor 13 (the position of the piston 12) can also be obtained by integrating the velocity V1.

In this case, the velocity C1 of the radio wave is determined by the dielectric constant of the medium and barely varies depending on the flow, temperature and pressure of the medium. Thus the variation in the radio wave velocity C1 is small and the error included in the relative velocity V1 between the super-spring structure and the sub-spring structure obtained from the expression (2) is also small. Therefore, the radio wave radar is more advantageous compared to ultrasonic radars.

While the behavior of the suspension is calculated above based on the frequencies of the transmission wave and the reception wave, it is also possible to calculate the position of the radio wave radar sensor 13 (position of the piston 12) by transmitting the transmission wave as a pulse, measuring the time between the transmission of the transmission wave and the reception of a reflected wave as the reception wave, and obtaining the position from the measured time and the radio wave velocity. The velocity of the radio wave radar sensor 13 can also be obtained by differentiating the position. Also in this case, the error included in the relative velocity between the super-spring structure and the sub-spring structure is small thanks to the small variation in the radio wave velocity, which is an advantage over ultrasonic radars.

As shown in Fig. 2, by forming the surface of the inner cylinder 10 facing the radio wave radar sensor 13 and reflecting the radio waves substantially in the shape of a trigonal pyramid 19, the reflection coefficient for the radio waves transmitted by the radio wave radar sensor 13 is stabilized and thereby the detection of the suspension behavior can be carried out more stably compared to an ordinary inner cylinder with a plane surface, irrespective of the suspension behavior and installation conditions of the radio wave radar. While the trigonal pyramid-like shape is used here, similar effect can also be achieved by other types of pyramid, cones, spherical surfaces, etc.

Further, while the radio wave radar sensor 13 is attached to the rod 7 in the above embodiment, similar effects can also be attained by attaching the radio wave radar sensor 13 to the inner cylinder 10 to detect the behavior of the rod 7.

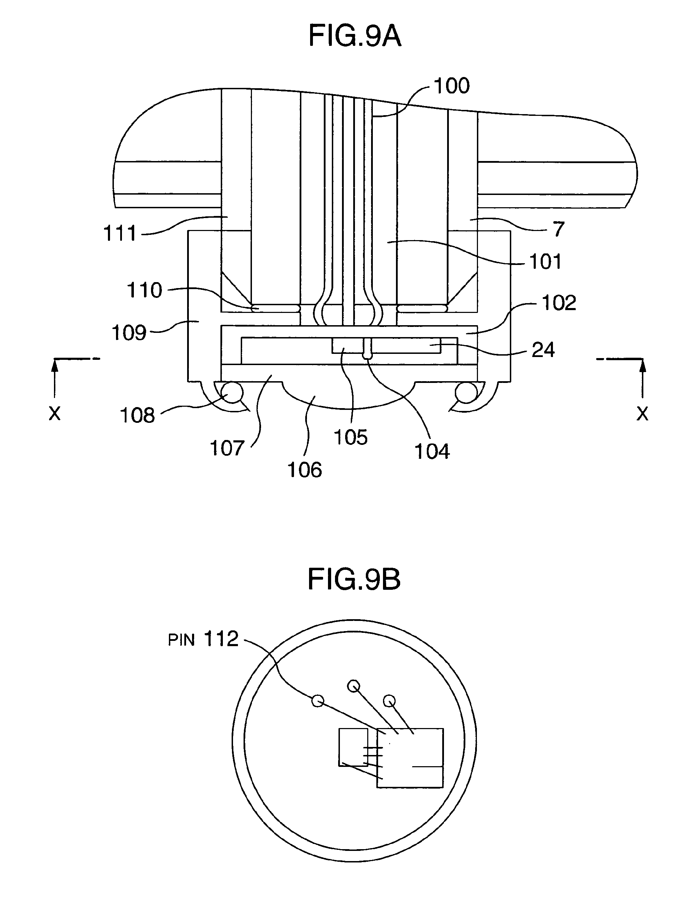

In the following, the installation of the radio wave radar sensor 13 will be described referring to Figs. 9A and 9B.

An MMIC (Microwave Monolithic Integrated Circuit) 105 (forming the RF module 27 of the radio wave radar sensor 13 shown in Fig. 4A or 4B) and the processor 24 are mounted in a ceramic package 102, with an antenna of the MMIC 105 placed substantially at the center of the package 102. A ceramic cover 107 provided with a dielectric lens 106 is joined to the package 102 by a brazing material, etc. so that the axis of the dielectric lens 106 will be coaxial with the radio wave transmission axis of the antenna. The MMIC 105 and the processor 24 are connected together by wire bonding by Au wires 104. A power line to the MMIC 105 and a signal line from the processor 24 are kept continuous and conductive via pins penetrating the package 102 and cables 100 placed in a hollow part 101 of the rod 7. The cables 100 are connected to a connector 4 shown in Fig. 2. The MMIC, forming a distribution constant circuit, gets smaller as the frequency gets higher in an inversely proportional relationship. Therefore, the cost of the MMIC can be reduced excellently by employing an extremely high frequency in a millimeter wave band.

The package 102 is attached to a housing 109 by swaging a part of the housing toward the package via an O ring 108. The housing 109 has a threaded part 111, by which the housing 109 is screwed and fastened to the rod 7 via packing 110.

By the above composition, the MMIC 105 and the processor 24 can be hermetically sealed in a highly pressure-resistant structure even in the suspension oil. The rod 7 is generally provided with a screw thread which is used for fixing the piston 12 thereon, and the radio wave radar sensor 13 is attached to the rod 7 by use of the screw thread, by which very easy attachment of the radio wave radar sensor 13 is realized. Further, since the antenna is placed substantially at the center, the radio wave transmission/reception conditions are not affected by the screwing status of the radio wave radar sensor 13, which allows high productivity of the suspension device.

The connection of the housing 109 to the rod 7 is not restricted to the screwing described above; welding the housing 109 to the rod 7 is also an excellent method since the welding can also secure the hermeticity, highly pressure resistance, satisfactory attachment to the rod 7, and insusceptibility of the radio wave transmission/reception conditions to welding status.

As shown in Fig. 2, the suspension device may also be provided with a position sensor 23 for detecting positional relationship between the super-spring structure and the sub-spring structure in the rod axis direction regarding at least one point. In this case, the position of the piston 12 calculated by the processor 24 of the radio wave radar sensor 13 is corrected based on the positional information obtained by the position sensor 23, by which precise measurement of the position and self-diagnosis of the radio wave radar sensor 13 can be realized excellently.

It is also possible to provide a wheel status estimating module 29 which estimates air pressure status and attachment status of the wheel based on the relative behavior information on the rod 7 and the inner cylinder 10. By such composition, a burst, faulty attachment, poor balance, etc. of the wheel can be detected by the suspension device and that is highly advantageous.

Incidentally, the relative behavior information on the rod 7 and the inner cylinder 10 can also be obtained by use of an acceleration sensor attached to the sub-spring structure for detecting acceleration, a linear sensor for obtaining positional information on the rod 7 and the inner cylinder 10, an ultrasonic radar sensor, an optical radar sensor, etc., instead of using the radio wave radar sensor.

As set forth hereinabove, by the suspension device in accordance with the above embodiment of the present invention, the behavior of the suspension device can be detected correctly and the result of the detection can be applied to suspension control, by which contributions of the suspension devices to the improvement of riding comfort and safety control of vehicles such as cars can be increased considerably.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A suspension device (2) comprising a rod (7) supporting a super-spring structure connected to a body (1) of a vehicle and a cylinder (10, 11) supporting a sub-spring structure connected to a wheel (3), the rod (7) and the cylinder (10, 11) behaving according to prescribed spring constant and damper constant, wherein the suspension device (2) further comprises:

   a transmitter (13, 27, 105) which is provided to the rod (7) or the cylinder (10, 11) to transmit a transmission wave to the cylinder (10, 11) or rod (7) facing the transmitter (13, 27, 105);
   a receiver (13, 27, 105) which receives a reflected wave from the cylinder (10, 11) or rod (7) facing the transmitter (13, 27, 105) as a reception wave; and
   a signal processing circuit (24) which calculates relative behavior of the rod (7) and the cylinder (10, 11) based on the transmission wave and the reception wave.

2. The suspension device (2) according to claim 1, wherein the transmission or reception wave is a radio wave in a millimeter wave band.

3. The suspension device (2) according to claim 1 or 2, further comprising a mixer (51, 56) which outputs a frequency difference between a frequency of the transmission wave and a frequency of the reception wave, wherein the signal processing circuit (24) calculates the relative behavior of the rod (7) and the cylinder (10, 11) by executing a Fourier transform to the output of the mixer (51, 56).

4. The suspension device (2) according to at least one of claims 1 to 3, wherein the transmitter (13, 27, 105) transmits the transmission wave as pulse signals, and
   the signal processing circuit (24) calculates the relative behavior of the rod (7) and the cylinder (10, 11) by measuring each time from the transmission of the transmission wave to the reception of the reflected wave as the reception wave.

5. The suspension device (2) according to at least one of claims 1 to 4, wherein a surface facing the transmitter (13, 27, 105) is formed in a pyramidal or circular concave shape.

6. The suspension device (2) according to at least one of claims 1 to 5, wherein:

   at least the transmitter (13, 27, 105), the receiver (13, 27, 105) and the mixer (51, 56) are implemented by an MMIC (105), and
   the MMIC (105) and the signal processing circuit (24) are mounted in a package (102), and
   the package (102) is fixed to the rod (7) or the cylinder (10, 11) via a housing (109) supporting the package (102).

7. The suspension device (2) according to at least one of claims 1 to 6, wherein the package (102) is fixed to the rod (7) or the cylinder (10, 11) via the housing (109) by welding.

8. The suspension device (2) according to at least one of claims 1 to 7, wherein the package (102) is fixed to the rod (7) or the cylinder (10, 11) via the housing (109) by screws or bolts and nuts.

9. The suspension device (2) according to at least one of claims 1 to 8, wherein:

   the package (102) includes a case and a cover (107) made of ceramic or resin, and
   the cover (107) is provided with a dielectric lens (106).

10. The suspension device (2) according to at least one of claims 1 to 9, wherein the dielectric lens (106) is placed in a central part or at the center of the rod (7) or the cylinder (10, 11).

11. The suspension device (2) according to at least one of claims 1 to 10, further comprising a position sensor (23) which detects relative position between the super-spring structure and the sub-spring structure in a rod axis direction, wherein:

   measurement values of the relative behavior of the rod (7) and the cylinder (10, 11) obtained by the signal processing circuit (24) are corrected based on positional information obtained by the position sensor (23).

12. The suspension device (2) according to at least one of claims 1 to 11, wherein the relative position is detected regarding two or more points.

**13.** A suspension device (2) comprising a rod (7) supporting a super-spring structure connected to a body (1) of a vehicle and a cylinder (10, 11) supporting a sub-spring structure connected to a wheel (3), the rod (7) and the cylinder (10, 11) exhibiting behavior specified by prescribed spring constant and damper constant, wherein the suspension device (2) further comprises:

> a sensor (13) which detects relative behavior of the rod (7) and the cylinder (10, 11); and
> a wheel status estimating device which estimates status of the wheel (3) based on information on the relative behavior detected by the sensor (13).

**14.** The suspension device (2) according to claim 13, wherein the sensor (13) is one selected from an acceleration sensor, a linear sensor and a radar sensor.

**15.** The suspension device (2) according to claim 13 or 14, wherein the estimated status of the wheel (3) includes at least one of air pressure and attachment status of the wheel (3).

# FIG.1

# FIG.2

4 CONNECTOR

5 ROD GUIDE

6

23

7    8

9

22

CONTRACTION-SIDE VALVE 21

10

11

EXPANSION-SIDE VALVE 20

12

13

14

19    15

16

17

18

# FIG.3

```
13
  ┌──────────────────────────────────────────────────┐
  │   27                              29               │
  │ ┌──────────────────────┬───────────────────────┐  │
  │ │                      │  WHEEL STATUS         │  │
  │ │ SUSPENSION BEHAVIOR  │  ESTIMATING           │  │
  │ │ DETECTION MODULE     │  MODULE               │  │
  │ └──────────────────────┴───────────────────────┘  │
  │                                                    │
  │ ┌──────────────────────────────────────────────┐  │
  │ │                                                │  │
  │ │  ┌──────────────────────────────────────┐    │  │
  │ │  │ FREQUENCY DETECTION MODULE           │    │  │
  │ │  └──────────────────────────────────────┘    │  │
  │ │                                                │  │
  │ │  ┌──────────────────────────────────────┐    │  │
  │ │  │ PEAK DETECTION MODULE                │    │  │
  │ │  └──────────────────────────────────────┘    │  │
  │ │                                                │  │
  │ │  ┌──────────────────────────────────────┐    │  │
  │ │  │ VELOCITY/POSITION                    │    │  │
  │ │  │ CALCULATION MODULE                   │    │  │
  │ │  └──────────────────────────────────────┘    │  │
  │ │                                                │  │
  │ └──────────────────────────────────────────────┘  │
  │    24                                              │
  └──────────────────────────────────────────────────┘
```

# FIG.4A

# FIG.4B

56 OSCILLATOR/MIXER

# FIG.5A

# FIG.5B

# FIG.6A

# FIG.6B

# FIG.7

# FIG.8

# FIG.9A

100

111

7

101

110

102

109

24

108

X

107

106

105

104

X

# FIG.9B

PIN 112